# EUROPEAN PATENT APPLICATION

(11) **EP 4 166 998 A1**
(43) Date of publication of application: **19.04.2023**
(21) Application number: 21822212.3
(22) Date of filing: 10.06.2021
(51) Int. Cl.: G02B 5/08, B32B 7/023

(54) **FILM MIRROR LAMINATE, AND MIRROR MEMBER**

(30) Priority: 12.06.2020 JP 2020102341; 22.06.2020 JP 2020107154; 16.11.2020 JP 2020190351; 05.03.2021 JP 2021035697
(71) Applicant: NITTO DENKO CORPORATION, Ibaraki-shi Osaka 567-8680 (JP)
(72) Inventor: TANAKA, Kazuki, Ibaraki-shi, Osaka 567-8680 (JP); NASHIKI, Tomotake, Ibaraki-shi, Osaka 567-8680 (JP)
(74) Representative: Hoffmann Eitle
(86) International application number: PCT/JP2021/022212
(87) International publication number: WO 2021/251476

(57) **Abstract**

The present invention relates to a film mirror laminate including a substrate film, a metal reflective layer, a first low refractive index layer, a high refractive index layer, and a second low refractive index layer in this order, in which a thickness of the second low refractive index layer is 10 nm or more and 60 nm or less.

## Description

### TECHNICAL FIELD

The present invention relates to a film mirror laminate and a mirror member.

### BACKGROUND ART

A driver of a vehicle gazes ahead through a windshield, and drives the vehicle while looking at instruments on an instrument panel. That is, the line of sight moves forward and downward to the instruments. If the driver can see the instruments while looking ahead, there is no movement of the line of sight, and an increase in drivability (finally, safety) can be expected. From this finding, head-up display devices have been developed and put into practical use.

In a head-up display device, an image from a light source is formed as a virtual image on a windshield in a dashboard device, and the image is visually recognized by a driver. In order to project image information from the light source without a decrease in luminance, a mirror surface body having a high reflectance is required.

From a viewpoint of increasing driving safety, a head-up display, which requires less movement of a viewpoint, is attracting more and more attention day by day, and a demand for a mirror surface body used as a reflecting mirror of the display is also increasing. From viewpoints of a low risk of breakage due to an accident such as a collision of a vehicle, a light weight, and the like, as a support substrate constituting the mirror surface body, a plastic substrate, particularly a polycarbonate substrate or the like is used because of its high heat resistance.

In a related-art method of producing a mirror surface body, a method of forming a metal thin film on a polycarbonate substrate with a batch-type vapor deposition/sputtering apparatus is typically used. However, the batch-type producing method has low production efficiency, and has a problem of causing supply shortages though a demand for a mirror surface body increases day by day. Thus, a mirror surface body that can be produced with high productivity is desired. In addition, the mirror surface body is required to have a high reflectance and prevent distortion of reflected light.

On the other hand, a film mirror that can be attached to a support has been studied. For example, Patent Literature 1 discloses a film mirror including at least a light reflecting layer, a resin substrate, and an adhesive layer that is formed of an acrylic adhesive, and the film mirror is used in a reflecting device for solar thermal power generation.

Patent Literature 2 discloses an aluminum surface reflecting mirror in which a first low refractive index layer, a high refractive index layer, and a second low refractive index layer each having a specific refractive index and an optical film thickness are laminated on an aluminum surface, for the purpose of providing an aluminum surface reflecting mirror having excellent scratch resistance and moisture resistance and having a small reflectance difference depending on a wavelength.

### CITATION LIST

### PATENT LITERATURE

Patent Literature 1: JP2015-210335A
Patent Literature 2: JPH05-173005A

### SUMMARY OF INVENTION

### TECHNICAL PROBLEM

The inventors have studied a film mirror that achieves producing a mirror member that can be used as a mirror surface body with high productivity by being allowed to adhere to a support substrate made of a resin. However, in a related-art film mirror laminate, a plurality of layers are laminated in order to achieve a high reflectance. This may cause the film mirror laminate to curl (to be warped), and may distort reflected light when the related-art film mirror laminate is applied to a mirror member, and thus, it has been found that a reflection performance of the film mirror laminate is not sufficient for use as a mirror surface body in a head-up display device.

Therefore, there is a demand for a mirror member that achieves both a high reflectance and excellent curl prevention and has an excellent reflection performance, and a film mirror laminate that can provide the mirror member with high productivity and can be easily applied to a complicated curved surface shape or the like.

The present invention has been made in view of the above circumstances, and an object of the present invention is to provide a mirror member that achieves both a high reflectance and excellent curl prevention and has an excellent reflection performance, and a film mirror laminate that can provide the mirror member with high productivity and can be easily applied to a complicated curved surface shape or the like.

### SOLUTION TO PROBLEM

As a result of intensive studies, the present inventors have found that the above problems can be solved by the following configurations.

That is, the present invention is as follows.
[1] A film mirror laminate, including:
   a substrate film, a metal reflective layer, a first low refractive index layer, a high refractive index layer, and a second low refractive index layer in this order,
   in which a thickness of the second low refractive index layer is 10 nm or more and 60 nm or less.
[2] The film mirror laminate according to [1],
   in which a thickness of the metal reflective layer is 100 µm or less.
[3] The film mirror laminate according to [1] or [2],
   in which the first low refractive index layer and the second low refractive index layer contain silicon oxide.
[4] The film mirror laminate according to any one of [1] to [3],
   in which the high refractive index layer contains niobium oxide.
[5] The film mirror laminate according to any one of [1] to [4],
   in which the metal reflective layer contains any one of at least one metal selected from aluminum (Al), zinc (Zn), lead (Pb), copper (Cu), and silver (Ag), and an alloy containing the metal as a main component.
[6] A mirror member, including:
   the film mirror laminate according to any one of [1] to [5], and a support substrate,
   in which the film mirror laminate is attached to the support substrate through an adhesive layer.

### ADVANTAGEOUS EFFECTS OF INVENTION

The present invention can provide a mirror member that achieves both a high reflectance and excellent curl prevention and has an excellent reflection performance, and a film mirror laminate that can provide the mirror member with high productivity and can be easily applied to a complicated curved surface shape or the like.

### BRIEF DESCRIPTION OF DRAWINGS

FIG. 1 is a schematic cross-sectional view of a film mirror laminate according to an embodiment of the present invention.
FIG. 2 is a schematic cross-sectional view of a mirror member according to an embodiment of the present invention.
FIG. 3 is a diagram illustrating a relationship between a wavelength (380 nm to 680 nm) of incident light at 30° and a simulated reflectance (%) in a mirror member in Example 2.
FIG. 4 is a diagram illustrating a relationship between a wavelength (380 nm to 680 nm) of incident light at 30° and a simulated reflectance (%) in each of mirror members in Example 3, Example 4, and Comparative Example 3.
FIG. 5 is a diagram illustrating a relationship between a wavelength (380 nm to 680 nm) of incident light at 30° and a simulated reflectance (%) in each of mirror members in Example 5, Example 6, and Comparative Example 4.
FIG. 6 is a diagram illustrating a relationship between a wavelength (380 nm to 680 nm) of incident light at 30° and a simulated reflectance (%) in each of mirror members in Examples 7, 8, and 9.
FIG. 7 is a diagram illustrating a relationship between a wavelength (380 nm to 680 nm) of incident light at 30° and a simulated reflectance (%) in each of mirror members in Examples 10, 11, and 12.

### DESCRIPTION OF EMBODIMENTS

Hereinafter, embodiments of the present invention will be described in detail. The present invention is not limited to the embodiments to be described below.

### [Film Mirror Laminate]

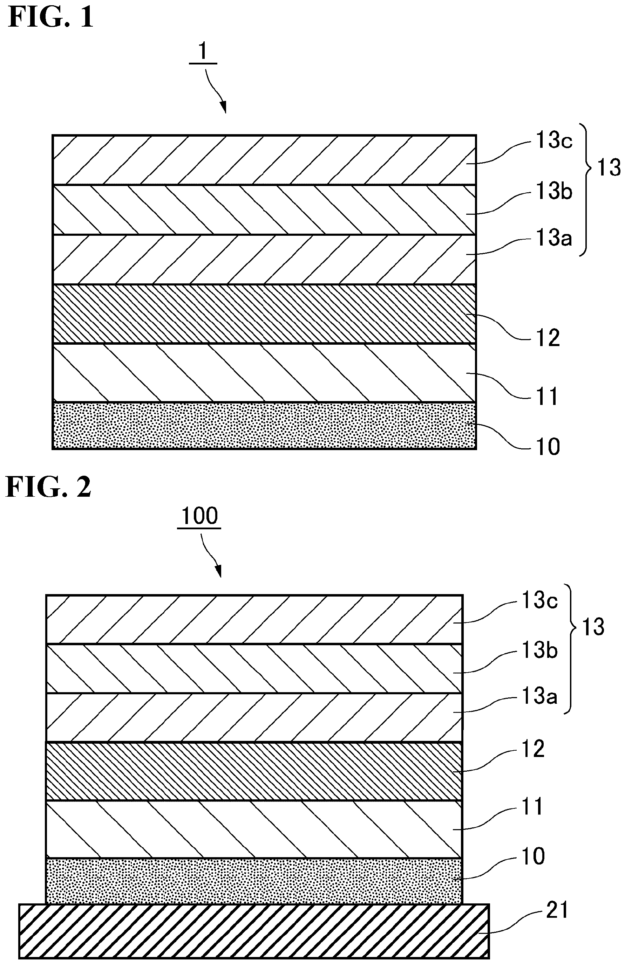

FIG. 1 shows a schematic cross-sectional view of a film mirror laminate 1 according to an embodiment of the present invention.

The film mirror laminate 1 according to the embodiment of the present invention includes a substrate film 11, a metal reflective layer 12, a first low refractive index layer 13a, a high refractive index layer 13b, and a second low refractive index layer 13c in this order, and a thickness of the second low refractive index layer is 10 nm or more and 60 nm or less.

The film mirror laminate 1 according to the embodiment of the present invention can be used, for example, by being attached to a support substrate through an adhesive layer 10.

In the film mirror laminate 1 according to the embodiment of the present invention, the first low refractive index layer 13a, the high refractive index layer 13b, and the second low refractive index layer 13c function as a reflection hue adjusting layer, and can adjust a reflection spectrum according to a wavelength of light to increase a reflectance.

A film mirror laminate that achieves both a high reflectance and excellent curl prevention and has an excellent reflection performance can be obtained by providing the first low refractive index layer 13a, the high refractive index layer 13b, and the second low refractive index layer 13c in this order on the metal reflective layer 12, and setting the thickness of the second low refractive index layer to 10 nm or more and 60 nm or less.

### <Substrate Film>

The substrate film 11 is not limited, but for example, a film made of a homopolymer or a copolymer such as polyethylene terephthalate (PET), polyethylene naphthalate (PEN), polybutylene terephthalate, polyamide, polyvinyl chloride, polycarbonate (PC), cycloolefin polymer (COP), polystyrene, polypropylene (PP), polyethylene, polycycloolefin, polyurethane, acrylic (PMMA), and ABS can be used. These members are transparent, have little optical absorption, and do not affect a visual effect. However, various layers are to be formed on the substrate film 11 later, and thus, a material that can withstand a high temperature in vapor deposition, sputtering, and the like is preferably used. Therefore, among the above materials, for example, polyethylene terephthalate, polyethylene naphthalate, acrylic, polycarbonate, cycloolefin polymer, ABS, polypropylene, and polyurethane are preferred. Among these, polyethylene terephthalate, cycloolefin polymer, polycarbonate, and acrylic are preferred in terms of a good balance between a heat resistance and a cost. The substrate film 11 may be a single-layer film or a laminated film.

From a viewpoint of ease of processing and the like, a thickness is preferably, for example, 6 µm to 250 µm. The thickness is more preferably 20 µm or more, and still more preferably 40 µm or more. The thickness is more preferably 100 µm or less, and still more preferably 75 µm or less. In order to increase an adhesion force to the layers formed on the substrate film, a plasma treatment, a corona treatment, an easy adhesion treatment, or the like may be performed on the substrate film.

A hard coat layer such as a smooth or antiglare hard coat layer may be formed on the substrate film 11 as necessary. Providing the hard coat layer allows for increasing a scratch resistance.

The hard coat layer may be formed of a hard coat composition. Specifically, the hard coat layer may be formed by applying a solution containing a curable resin, as the hard coat composition, to the substrate film 11.

Examples of the curable resin include a thermosetting resin, an ultraviolet curable resin, and an electron beam curable resin. Examples of the curable resin include various resins such as a polyester resin, an acrylic resin, a urethane resin, an acrylic urethane resin, an amide resin, a silicone resin, a silicate resin, an epoxy resin, a melamine resin, an oxetane resin, and an acrylic urethane resin. One or more of these curable resins can be appropriately selected and used. Among these, an acrylic resin, an acrylic urethane resin, and an epoxy resin are preferred as these resins have high hardness, can be cured with ultraviolet rays, and are excellent in productivity.

A thickness of the hard coat layer is preferably 0.5 µm or more, and more preferably 1.0 µm or more, and is preferably 10 µm or less, more preferably 7.0 µm or less, and still more preferably 5.0 µm or less. The thickness of the hard coat layer can be measured with, for example, a film thickness meter (digital dial gauge).

### <Metal Reflective Layer>

The metal reflective layer 12 in the present embodiment is formed on the substrate film 11. The metal reflective layer 12 is preferably a layer having metallic luster. A material for forming the metal reflective layer 12 is not limited, but may include a metal and a resin. The metal reflective layer 12 may be a metal layer.

A case where the metal reflective layer 12 is a metal layer will be described.

It is desirable that the metal reflective layer 12 is formed of a metal having a relatively low melting point as well as having sufficient brilliance. This is because the metal reflective layer 12 is preferably formed by thin film growth with sputtering. For this reason, a metal having a melting point of about 1000°C or less is suitable as the metal reflective layer 12, and for example, the metal reflective layer 12 preferably contains any one of at least one metal selected from aluminum (Al), zinc (Zn), lead (Pb), copper (Cu), and silver (Ag), and an alloy containing the metal as a main component.

In particular, from viewpoints of brilliance, stability, prices, and the like of a substance, Al and an alloy thereof are preferred. When an aluminum alloy is used, an aluminum content of the alloy is preferably 50 mass% or more.

A thickness of the metal reflective layer 12 is typically preferably 20 nm or more so as to exhibit sufficient brilliance, and is typically preferably 100 nm or less from viewpoints of a sheet resistance and electromagnetic wave permeability. For example, the thickness is preferably 20 nm to 100 nm, and more preferably 30 nm to 70 nm. This thickness is also suitable for forming a uniform film with high productivity, and an appearance of a mirror member is good when the mirror member produced by attaching the film mirror laminate 1 to a support substrate is used as a mirror surface body.

### <Reflection Hue Adjusting Layer>

The film mirror laminate 1 according to the embodiment of the present invention includes the first low refractive index layer 13a, the high refractive index layer 13b, and the second low refractive index layer 13c in this order on a surface of the metal reflective layer 12 opposite to the substrate film 11, and the thickness of the second low refractive index layer 13c is 10 nm or more and 60 nm or less.

The first low refractive index layer 13a, the high refractive index layer 13b, and the second low refractive index layer 13c function as the reflection hue adjusting layer.

A film mirror laminate of the related art may curl, and may distort reflected light when applied to a mirror member. The present inventors considered that occurrence of curling of the film mirror laminate is caused by a reflection hue adjusting layer in which a low refractive index layer and a high refractive index layer are laminated for achieving a high reflectance. As a result of studies by the present inventors, it has been found that a film mirror laminate that achieves both a high reflectance and excellent curl prevention and has an excellent reflection performance can be obtained by providing the first low refractive index layer 13a, the high refractive index layer 13b, and the second low refractive index layer 13c in this order on the metal reflective layer 12, and setting the thickness of the second low refractive index layer to 10 nm or more and 60 nm or less.

### (First Low Refractive Index Layer and Second Low Refractive Index Layer)

The first low refractive index layer and the second low refractive index layer have a refractive index lower than that of the high refractive index layer, and a refractive index of the layers is, for example, 1.35 to 1.55, and preferably 1.40 to 1.50. The refractive index of the first low refractive index layer may be the same as or different from that of the second low refractive index layer.

In the present description, the "refractive index" means a value measured in accordance with a condition of JIS K0062:1992 using light having a wavelength λ of 550 nm at a temperature of 25°C, unless otherwise specified.

Examples of a material of the first low refractive index layer and the second low refractive index layer include a metal oxide and a metal fluoride.

A metal element contained in the metal oxide and the metal fluoride referred to herein includes a metalloid element such as Si. The metal oxide and/or the metal fluoride includes metal oxyfluoride. The metal oxide may be an oxide of a single metal element (single oxide) or an oxide of a plurality of metal elements (composite oxide). Similarly, the metal fluoride may be a fluoride of a single metal element (single fluoride) or a fluoride of a plurality of metal elements (composite fluoride).

Examples of the metal element include Si and Mg.

Specific examples of the metal oxide include silicon oxide (SiO₂: refractive index 1.46). Specific examples of the metal fluoride include magnesium fluoride and fluorosilicic acid. The material of the first low refractive index layer and the second low refractive index layer is preferably magnesium fluoride and fluorosilicic acid from a viewpoint of a refractive index, preferably silicon oxide from viewpoints of manufacturability, a mechanical strength, a moisture resistance, and the like, and preferably silicon oxide in consideration of various properties comprehensively. The material of the first low refractive index layer may be the same as or different from the material of the second low refractive index layer, and the first low refractive index layer and the second low refractive index layer preferably contain silicon oxide.

A thickness of the first low refractive index layer is preferably 50 nm or more, more preferably 66 nm or more, and still more preferably 68 nm or more, from a viewpoint of adjusting a visible light reflection spectrum to a desired range. In addition, the thickness is preferably 100 nm or less, more preferably 78 nm or less, and still more preferably 75 nm or less, from the viewpoint of adjusting the visible light reflection spectrum to the desired range.

The thickness of the second low refractive index layer needs to be 10 nm or more and 60 nm or less from a viewpoint of preventing curling, and an upper limit value of the thickness is preferably 50 nm or less, and more preferably 45 nm or less from a viewpoint of adjusting a visible light reflection spectrum to a desired range.

### (High Refractive Index Layer)

The high refractive index layer has a refractive index higher than those of the first low refractive index layer and the second low refractive index layer, and a refractive index of the high refractive index layer is, for example, 1.6 to 3.2, and preferably in a range of 1.80 to 2.40. When a plurality of high refractive index layers are provided, refractive indices of the high refractive index layers may be the same or different.

The high refractive index layer is preferably a layer made of a metal oxide and/or a metal nitride. A metal element contained in the metal oxide and the metal nitride referred to herein includes a metalloid element such as Si. The metal oxide and/or the metal nitride includes metal oxynitride. The metal oxide may be an oxide of a single metal element (single oxide) or an oxide of a plurality of metal elements (composite oxide). Similarly, the metal nitride may be a nitride of a single metal element (single nitride) or a nitride of a plurality of metal elements (composite nitride).

Examples of the metal element include Ce, Nb, Si, Sb, Ti, Ta, Zr, and Zn.

More specific examples of a material of the high refractive index layer include CeO₂ (2.30), NbO (2.33), Nb₂O₃ (2.15), Nb₂O₅ (2.32), SiO₂ (1.46), SiN (2.03), Sb₂O₃ (2.10), TiO₂ (2.35), Ta₂O₅ (2.10), ZrO₂ (2.05), ZnO (2.10), ZnS (2.30), tin-doped indium oxide (ITO), and antimony-doped tin oxide (ATO) (numerical values in parentheses for the above materials are respective refractive indices).

In particular, the high refractive index layer preferably contains at least one selected from Nb, Si, and Ti, and for example, preferably contains at least one selected from NbOₓ, SiNₓ, and TiOₓ, and more preferably contains NbOₓ (niobium oxide).

A thickness of the high refractive index layer is preferably 50 nm or more, more preferably 52 nm or more, and still more preferably 53 nm or more, from a viewpoint of adjusting a visible light reflection spectrum to a desired range. In addition, the thickness is preferably 100 nm or less, more preferably 59 nm or less, and still more preferably 55 nm or less, from the viewpoint of adjusting the visible light reflection spectrum to the desired range.

The film mirror laminate 1 may further include a low refractive index layer and a high refractive index layer in addition to the first low refractive index layer 13a, the high refractive index layer 13b, and the second low refractive index layer 13c.

As a medium refractive index layer having a refractive index of about 1.50 to 1.85, for example, a thin film made of titanium oxide or a mixture of the low refractive index material and the high refractive index material described above (a mixture of titanium oxide and silicon oxide, or the like) may be further included.

A laminated configuration of the reflection hue adjusting layer is not limited as long as the first low refractive index layer 13a, the high refractive index layer 13b, and the second low refractive index layer 13c are provided in this order on the metal reflective layer 12, and the thickness of the second low refractive index layer is 10 nm or more and 60 nm or less.

Examples of the configuration include, from a metal reflective layer 12 side, a three-layer configuration of a first low refractive index layer, a high refractive index layer, and a second low refractive index layer; a four-layer configuration of a high refractive index layer, a first low refractive index layer, a high refractive index layer, and a second low refractive index layer; and a five-layer configuration of a first low refractive index layer, a high refractive index layer, a low refractive index layer, a high refractive index layer, and a second low refractive index layer.

The reflection hue adjusting layer may be a laminate of six or more thin films.

### <Other Layers>

The film mirror laminate according to the embodiment of the present invention may include other layers in addition to the substrate film 11, the first low refractive index layer 13a, the high refractive index layer 13b, the second low refractive index layer 13c, and the metal reflective layer 12, depending on an application of the film mirror laminate.

Examples of the other layers include an adhesive layer, a protective layer, a hard coat layer, a barrier layer, an easy-adhesion layer, an antireflection layer, a light extraction layer, and an antiglare layer.

For example, some oxides, such as niobium oxide, are reduced when exposed to ultraviolet light in a state of being laminated with an adhesive, and a layer made of silicon oxide may be further laminated as a protective layer in order to prevent such a reduction.

### <Adhesive Layer>

The adhesive layer 10 may be formed of an adhesive.

The adhesive forming the adhesive layer 10 is preferably a transparent adhesive, and for example, an acrylic adhesive, a rubber adhesive, a silicone adhesive, a polyester adhesive, a urethane adhesive, an epoxy adhesive, and a polyether adhesive may be used alone or in combination of two or more thereof. From viewpoints of transparency, processability, durability, and the like, an acrylic adhesive is preferably used.

The adhesive layer 10 is preferably protected by a release liner until the adhesive layer 10 is attached to an adherend member.

The adhesive forming the adhesive layer 10 is preferably formed of an adhesive composition (hereinafter, sometimes simply referred to as an "adhesive composition") containing a base polymer. As the base polymer, a known polymer used for the adhesive may be used. Here, the base polymer refers to a main component of a polymer contained in the adhesive composition. In this description, the "main component" refers to a component contained in an amount of more than 50 mass%, unless otherwise specified.

### (Adhesive Composition)

The adhesive composition preferably contains a (meth)acrylic polymer as the base polymer. A (meth)acrylate refers to an acrylate and/or a methacrylate. A part of monomers constituting the (meth)acrylic polymer may be contained as unreacted monomers in the adhesive composition.

The (meth)acrylic polymer in the embodiment of the present invention is preferably a hydroxy group-containing (meth)acrylic polymer containing an alkyl(meth)acrylate and a hydroxy group-containing monomer as monomer units. A method of introducing a hydroxy group is not limited, and for example, a method of copolymerizing a hydroxy group-containing monomer can be easily performed.

The (meth)acrylic polymer in the embodiment of the present invention refers to an acrylic polymer and/or a methacrylic polymer, the (meth)acrylate refers to an acrylate and/or a methacrylate, and the alkyl(meth)acrylate refers to alkyl acrylate and/or alkyl methacrylate.

Examples of the alkyl(meth)acrylate include methyl(meth)acrylate, ethyl(meth)acrylate, propyl(meth)acrylate, butyl(meth)acrylate, and 2-ethylhexyl(meth)acrylate. These compounds may be used alone or in combination of two or more thereof.

Examples of the hydroxy group-containing monomer include 2-hydroxyethyl(meth)acrylate, 2-hydroxypropyl(meth)acrylate, 4-hydroxybutyl(meth)acrylate, 6-hydroxyhexyl(meth)acrylate, 8-hydroxyoctyl(meth)acrylate, 10-hydroxydecyl(meth)acrylate, 12-hydroxylauryl(meth)acrylate, (4-hydroxymethylcyclohexyl)methyl acrylate, N-methylol(meth)acrylamide, N-hydroxy(meth)acrylamide, vinyl alcohol, allyl alcohol, 2-hydroxyethyl vinyl ether, 4-hydroxybutyl vinyl ether, and diethylene glycol monovinyl ether. These monomers may be used alone or in combination of two or more thereof.

The hydroxy group-containing monomers may be used alone or in combination of two or more thereof, and a total content of the hydroxy group-containing monomer is preferably 1 part by mass to 40 parts by mass, and more preferably 2 parts by mass to 30 parts by mass with respect to 100 parts by mass of the (meth)acrylic polymer. Copolymerizing a hydroxy group-containing monomer allows for producing a hydroxy group-containing (meth)acrylic polymer to which a reaction point due to crosslinking or the like is imparted.

The (meth)acrylic polymer to be used in the embodiment of the present invention preferably has a weight average molecular weight of about 300,000 to 2,500,000. When the weight average molecular weight is less than 300,000, a cohesive force of the adhesive composition tends to be reduced to cause adhesive residue. The weight average molecular weight is obtained by measurement with gel permeation chromatography (GPC).

From a viewpoint of easy balance of an adhesive performance, a glass transition temperature (Tg) of the (meth)acrylic polymer is preferably 0°C or less (typically -100°C or more), and more preferably -10°C or less. When the glass transition temperature is higher than 0°C, the polymer is difficult to flow. The glass transition temperature (Tg) of the (meth)acrylic polymer may be adjusted within the above range by appropriately changing monomer components to be used and a composition ratio.

In addition to the above monomers, other polymerizable monomers such as a polymerizable monomer for adjusting a glass transition point and releasability of the (meth)acrylic polymer may be used as long as effects of the present invention are not impaired.

As the other polymerizable monomers to be used in the (meth)acrylic polymer, for example, a component for increasing a cohesive force and a heat resistance such as a sulfonic acid group-containing monomer, a phosphoric acid group-containing monomer, a cyano group-containing monomer, a vinyl ester monomer, and an aromatic vinyl monomer, and a component having a functional group acting as an adhesive strength increase or a crosslinking base point such as an acid anhydride group-containing monomer, an amide group-containing monomer, an amino group-containing monomer, an epoxy group-containing monomer, N-acryloylmorpholine, and a vinyl ether monomer may be appropriately used. These monomer compounds may be used alone or in combination of two or more thereof.

Examples of the cyano group-containing monomer include acrylonitrile and methacrylonitrile.

Examples of the vinyl ester monomer include vinyl acetate, vinyl propionate, and vinyl laurate.

Examples of the aromatic vinyl monomer include styrene, chlorostyrene, chloromethylstyrene, and α-methylstyrene.

Examples of the amide group-containing monomer include acrylamide, diethylacrylamide, and N-vinyl-2-pyrrolidone.

Examples of the amino group-containing monomer include N,N-dimethylaminoethyl(meth)acrylate, N,N-dimethylaminopropyl(meth)acrylate, N-(meth)acryloylmorpholine, and (meth)acrylic acid alkylaminoalkyl ester.

Examples of the epoxy group-containing monomer include glycidyl(meth)acrylate and allyl glycidyl ether.

Examples of the vinyl ether monomer include methyl vinyl ether, ethyl vinyl ether, and isobutyl vinyl ether.

In the embodiment of the present invention, the other polymerizable monomers may be used alone or in combination of two or more thereof, and a total content of the other polymerizable monomer is preferably 0 part by mass to 40 parts by mass, and more preferably 0 part by mass to 30 parts by mass with respect to 100 parts by mass of the (meth)acrylic polymer.

A polymerization method of the (meth)acrylic polymer is not limited, and a known polymerization method such as solution polymerization, emulsion polymerization, suspension polymerization, and UV polymerization may be adopted. An obtained copolymer may be any of a random copolymer, a block copolymer, a graft copolymer, and the like.

In the embodiment of the present invention, the adhesive composition may contain a polymer component other than the above base polymer.

In the embodiment of the present invention, the adhesive composition preferably contains a crosslinking agent, and an isocyanate-based crosslinking agent is preferably used as the crosslinking agent. The isocyanate-based crosslinking agent is used for imparting adhesion and cohesiveness.

As the isocyanate-based crosslinking agent, a polyfunctional isocyanate compound is used, and the polyfunctional isocyanate compound includes various compounds having two or more isocyanate groups in the molecule.

Examples of the isocyanate compound include lower aliphatic polyisocyanates such as butylene diisocyanate and hexamethylene diisocyanate; alicyclic isocyanates such as cyclopentylene diisocyanate, cyclohexylene diisocyanate, and isophorone diisocyanate; aromatic isocyanates such as 2,4-tolylene diisocyanate, 4,4'-diphenylmethane diisocyanate, and xylylene diisocyanate; and isocyanate adducts such as a trimethylolpropane/tolylene diisocyanate trimer adduct (trade name: Coronate L, manufactured by Nippon Polyurethane Industry Co., Ltd.), a trimethylolpropane/hexamethylene diisocyanate trimer adduct (trade name: Coronate HL, manufactured by Nippon Polyurethane Industry Co., Ltd.), and an isocyanurate of hexamethylene diisocyanate (trade name: Coronate HX, manufactured by Nippon Polyurethane Industry Co., Ltd.). Among these, those having an isocyanurate ring are particularly preferred, and examples thereof include a polyisocyanate having a long-chain alkylene diol-modified isocyanurate ring (Burnock DN-995, manufactured by Dainippon Ink and Chemicals, Inc.) and an isocyanurate of hexamethylene diisocyanate (trade name: Coronate HX, manufactured by Nippon Polyurethane Industry Co., Ltd.). These compounds may be used alone or in combination.

The crosslinking agent to be used in the embodiment of the present invention may be blended to the extent that the crosslinking agent does not affect adhesive properties, and is typically contained in an amount of 0.2 part by mass to 10 parts by mass, preferably 0.5 part by mass to 8 parts by mass, and more preferably 1 part by mass to 6 parts by mass, with respect to 100 parts by mass of the (meth)acrylic polymer.

In the embodiment of the present invention, the adhesive composition also preferably contains a polyfunctional (meth)acrylic monomer such as 1,6-hexanediol diacrylate as a crosslinking component. The (meth)acrylic monomer in the embodiment of the present invention refers to an acrylic monomer and/or a methacrylic monomer.

The polyfunctional (meth)acrylic monomer is typically contained in an amount of 0.2 part by mass to 10 parts by mass, preferably 0.5 part by mass to 8 parts by mass, and more preferably 1 part by mass to 6 parts by mass, with respect to 100 parts by mass of the (meth)acrylic polymer.

In the acrylic adhesive, a crosslinking agent (polyamine compound, melamine resin, aziridine derivative, urea resin) other than those exemplified above, a polymerization initiator, a tackifier, a plasticizer, a silane coupling agent, a colorant, a powder of a pigment or the like, a dye, a surfactant, a surface lubricant, a leveling agent, a softener, an antioxidant, an antistatic agent, an anti-aging agent, a light stabilizer, an ultraviolet absorber, a polymerization inhibitor, an inorganic or organic filler, a metal powder, a particle-like matter, a foil-like matter, or the like may also be appropriately used. These components may be used alone or in combination of two or more thereof.

### (Method for Forming Adhesive Layer)

The adhesive layer may be formed, for example, by applying the adhesive composition onto the substrate film and removing a solvent and the like by drying. In the application of the adhesive composition, one or more solvents may be appropriately added.

The adhesive layer may also be formed, for example, by allowing the substrate film to bond to a surface of an adhesive layer side of a laminate of a protective film and an adhesive layer formed on the protective film with the adhesive composition.

A thickness of the adhesive layer is preferably 5 µm or more, more preferably 10 µm or more, and still more preferably 25 µm or more, from a viewpoint of an appearance when the film mirror laminate and the support substrate are allowed to bond to each other. In addition, the thickness is preferably 100 µm or less, more preferably 75 µm or less, and still more preferably 50 µm or less, from a viewpoint of preventing foaming caused by high-temperature heating.

The thickness of the adhesive layer can be measured by a dial gauge.

As a method of applying the adhesive composition, various methods may be used. Specific examples of the method include roll coating, kiss roll coating, gravure coating, reverse coating, roll brushing, spray coating, dip roll coating, bar coating, knife coating, air knife coating, curtain coating, lip coating, and extrusion coating with a die coater or the like.

A temperature of the heat-drying is preferably 30°C to 200°C, more preferably 40°C to 180°C, and still more preferably 80°C to 160°C. Setting a heating temperature within the above range allows for providing an adhesive layer having excellent adhesive properties. For a drying time, an appropriate time may be adopted. The drying time is preferably 5 seconds to 20 minutes, more preferably 30 seconds to 10 minutes, and still more preferably 1 minute to 8 minutes.

When the adhesive composition is an active energy ray-curable adhesive, the adhesive layer may be formed by irradiation with active energy rays such as ultraviolet rays. For the ultraviolet irradiation, a high-pressure mercury lamp, a low-pressure mercury lamp, a metal halide lamp, a chemical light lamp, or the like may be used.

The adhesive layer in the film mirror laminate can be protected by a release sheet (separator).

For example, at the time of shipment of the film mirror laminate, the adhesive layer is in a state of being protected by the release sheet. Thereafter, the release sheet is released, and the adhesive layer is bonded to the support substrate to produce a mirror member.

The release sheet is not limited as long as the release sheet can protect the adhesive layer, and examples of the release sheet include a porous material such as a plastic film, paper, cloth, and nonwoven fabric, and an appropriate thin sheet such as a net, a foam sheet, a metal foil, and a laminate thereof. A plastic film is preferably used because of its excellent surface smoothness.

Examples of the plastic film include a polyethylene film, a polypropylene film, a polybutene film, a polybutadiene film, a polymethylpentene film, a polyvinyl chloride film, a vinyl chloride copolymer film, a polyethylene terephthalate film, a polybutylene terephthalate film, a polyurethane film, and an ethylene-vinyl acetate copolymer film.

A thickness of the release sheet is basically 5 µm to 200 µm, and preferably 5 µm to 100 µm. If necessary, the release sheet may be subjected to a release treatment and antifouling treatment with a silicone-based release agent, fluorine-based release agent, long-chain alkyl-based release agent, or fatty acid amide-based release agent, a silica powder, or the like, and may be subjected to an antistatic treatment of a coating type, a kneading type, a vapor deposition type, or the like. In particular, when a surface of the release sheet is appropriately subjected to a release treatment such as a silicone treatment, a long-chain alkyl treatment, or a fluorine treatment, releasability from the adhesive layer can be further enhanced.

### [Manufacture of Film Mirror Laminate]

A method for producing the film mirror laminate according to the embodiment of the present invention is not limited. For example, the metal reflective layer 12 may be formed on one surface of the substrate film 11, and the first low refractive index layer 13a, the high refractive index layer 13b, and the second low refractive index layer 13c may be formed in this order on the metal reflective layer 12.

The film mirror laminate may further include the adhesive layer, and the adhesive layer 10 may be formed directly on the other surface of the substrate film 11 by coating or the like of a composition capable of forming the adhesive layer 10, or may be formed by bonding a separately formed adhesive layer 10.

A method of forming the metal reflective layer 12, the first low refractive index layer 13a, the high refractive index layer 13b, and the second low refractive index layer 13c is not limited, but examples thereof include a vacuum deposition, a sputtering, and an ion plating. The sputtering is preferred because a thickness can be strictly controlled even in a large area.

When the metal reflective layer 12, the first low refractive index layer 13a, the high refractive index layer 13b, and the second low refractive index layer 13c are formed on the substrate film 11 by the sputtering, a rate of change in a heating dimension of the film mirror laminate can be adjusted by adjusting a tension of the substrate film at the time of film formation.

Examples of the tension of the substrate film at the time of film formation include a feeding tension, an intermediate tension, and a winding tension.

The feeding tension is a tension at the time of feeding a film onto a pass line from an original film in a state in which the film is wound, and a tension between a feeding portion and a first tension cut portion is the feeding tension. From a viewpoint of winding and tightening of the original film, the force of the feeding tension is preferably close to that of a tension at which the original film is wound.

The intermediate tension is a tension between path cut portions for forming the feeding tension and the winding tension, and the intermediate tension is preferably a tension larger than the feeding tension and the winding tension by 100 N or more, and more preferably a tension larger than the feeding tension and the winding tension by 200 N or more. In addition, the intermediate tension is preferably a tension smaller than the feeding tension and the winding tension by 400 N or less, and more preferably a tension smaller than the feeding tension and the winding tension by 300 N or less.

The winding tension is a tension when the film flowing in the pass line is wound as the original film, and a tension between a winding portion and a tension cut portion closest to the winding portion is the winding tension. From a viewpoint of a next step, the force of the winding tension is preferably close to that of a feeding tension in the next step.

The film mirror laminate according to the embodiment of the present invention may be used for a mirror member.

The film mirror laminate according to the embodiment of the present invention may also be used for decoration of a member. For example, the film mirror laminate may be used by being attached to an adherend member, and for example, a member made of glass or plastic may be used as the adherend member, but the adherend member is not limited thereto.

### [Mirror Member]

A mirror member according to an embodiment of the present invention includes the film mirror laminate described above and a support substrate, and the film mirror laminate is attached to the support substrate via the adhesive layer.

FIG. 2 is a schematic cross-sectional view of the mirror member according to the embodiment of the present invention. A mirror member 100 shown in FIG. 2 includes the substrate film 11, the metal reflective layer 12, the first low refractive index layer 13a, the high refractive index layer 13b, and the second low refractive index layer 13c in this order, and the film mirror laminate in which the thickness of the second low refractive index layer 13c is 10 nm or more and 60 nm or less is attached to a support substrate 21 via the adhesive layer 10.

The mirror member according to the embodiment of the present invention can be produced by attaching the film mirror laminate to the support substrate, and thus, the member having even a complicated curved surface shape can be produced with high productivity.

A method for producing the mirror member according to the embodiment of the present invention may include a step of performing a corona treatment on at least a part of a surface of the support substrate, and a step of attaching the film mirror laminate to the support substrate via the adhesive layer on the corona-treated surface of the support substrate.

### <Support Substrate>

A material of the support substrate is not limited, but examples of the material include a resin, glass, and a metal, and a resin is preferably used. Examples of the resin include a polyester resin such as polyethylene terephthalate (PET), polybutylene terephthalate, and polyethylene naphthalate; a (meth)acrylic resin (acrylic resin and/or methacrylic resin) such as polymethacrylate; an olefin resin such as polyethylene, polypropylene, and a cycloolefin polymer (for example, norbomene-based and cyclopentadiene-based polymers); a polycarbonate resin; a polyether sulfone resin; a polyarylate resin; a melamine resin; a polyamide resin; a polyimide resin; a cellulose resin; and a polystyrene resin. These materials may be used alone or in combination of two or more thereof. Among these, a polycarbonate resin is preferred as the polycarbonate resin can be made black and have excellent light shielding properties.

### [Reflectance of Film Mirror Laminate and Mirror Member]

Regarding a reflectance of the film mirror laminate and the mirror member according to the present embodiments, a reflectance Y in measurement of reflected light in a wavelength range of 380 nm to 680 nm is preferably 90% or more. In the film mirror laminate and the mirror member according to the embodiments of the present invention, the thickness of the second low refractive index layer is 10 nm or more and 60 nm or less, and thus the reflectance Y can be set to 90% or more, and a film mirror laminate and a mirror member having a high reflectance suitable for a mirror surface body in a head-up display device can be obtained.

The reflectance Y represents a visual feeling, and from a viewpoint of reflection of a display image, the reflectance Y is more preferably 91% or more, and still more preferably 92% or more.

The reflectance Y can be measured with a Hitachi spectrophotometer U-4100 measurement instrument manufactured by Hitachi High-Tech Science Corporation using D65 as a standard light source. Specifically, the reflectance Y can be measured by a method described in Examples.

### [Applications of Film Mirror Laminate and Mirror Member]

Examples of applications of the film mirror laminate and the mirror member according to the embodiments of the present invention include a structural part for a vehicle, a vehicle-mounted article such as a head-up display, a housing of an electronic device, a housing of a home appliance, a structural part, a machine part, various automobile parts, a part for an electronic device, an application for household goods such as furniture and kitchen goods, a medical device, a part of a building material, and other structural parts and exterior parts. More specific examples of the application in a vehicle field include an instrument panel, a console box, a door knob, a door trim, a shift lever, pedals, a glove box, a bumper, a hood, a fender, a trunk, a door, a roof, a pillar, a seat, a steering wheel, an ECU box, an electrical part, an engine peripheral part, a drive system/gear peripheral part, an intake/exhaust system part, and a cooling system part. More specific examples of the application for the electronic device and the home appliance include household electric appliances such as a refrigerator, a washing machine, a vacuum cleaner, a microwave oven, an air conditioner, a lighting device, an electric water heater, a television, a clock, a ventilation fan, a projector, and a speaker; and electronic information devices such as a personal computer, a mobile phone, a smartphone, a digital camera, a tablet PC, a portable music player, a portable game machine, a charger, and a battery.

### EXAMPLES

Hereinafter, the present invention will be described based on Examples, but the present invention is not limited thereto.

### [Example 1]

### [Production of Adhesion Layer]

As a substrate film, a PET film Lumirror (product number: QTQ2, thickness: 50 µm, with an HC layer) manufactured by Toray Industries, Inc., was prepared.

A pure silicon target and the substrate film were set in a magnetron sputtering apparatus for laboratory, and a silicon oxide layer (SiO₂ layer) having a thickness of 5 nm was formed as an adhesion layer on one surface of the substrate film.

### (Formation Conditions of Adhesion Layer)

Ultimately degree of vacuum: 1.0 × 10⁻⁴ Pa
Sputtering gas: using Ar and O₂ and adjusting O₂/(Ar + O₂) to 0.3
Chamber pressure: 0.30 Pa
Substrate temperature: 25°C

### [Production of Metal Reflective Layer]

An Al target and the substrate film on which the adhesion layer was formed were set in the magnetron sputtering apparatus for laboratory, and an aluminum layer (Al layer) having a thickness of 44 nm was formed as a metal reflective layer on the adhesion layer.

A feeding tension and a winding tension of the substrate film were set to 50 N, and an intermediate tension was set to 50 N.

### (Formation Conditions of Al Layer)

Ultimately degree of vacuum: 1.0 × 10⁻³ Pa
Sputtering gas: Ar
Chamber pressure: 0.30 Pa
Substrate temperature: 25°C

### [Production of Reflection Hue Adjusting Layer]

The substrate film on which the Al layer was formed with the magnetron sputtering apparatus for laboratory was set in a magnetron sputtering apparatus, and thin films of transparent oxide were formed on the Al layer in an order of silicon oxide having a thickness of 67 nm (refractive index: 1.46) as a first low refractive index layer, niobium oxide (Nb₂O₅) having a thickness of 53 nm (refractive index: 2.32) as a high refractive index layer, and silicon oxide (SiO₂) having a thickness of 40 nm (refractive index: 1.46) as a second low refractive index so as to form a reflection hue adjusting layer. In formation of the thin films of silicon oxide and niobium oxide, a pure silicon target and a pure niobium target were used as targets, oxygen gas was introduced in addition to argon gas, and reactive sputtering was performed to obtain the thin films of transparent oxide, respectively.

The feeding tension and the winding tension of the substrate film were set to 50 N, and the intermediate tension was set to 50 N.

### (Film Forming Conditions of Silicon Oxide)

Ultimately degree of vacuum: 1.0 × 10⁻⁴ Pa
Sputtering gas: using Ar and O₂ and adjusting O₂/(Ar + O₂) to 0.4
Chamber pressure: 0.30 Pa
Substrate temperature: 25°C

### (Film Forming Conditions of Niobium Oxide)

Ultimately degree of vacuum: 1.0 × 10⁻³ Pa
Sputtering gas: using Ar and O₂ and adjusting O₂/(Ar + O₂) to 0.2
Chamber pressure: 0.30 Pa
Substrate temperature: 25°C

As described above, the film mirror laminate 1 in which thin layers were formed on the one surface of the PET substrate (substrate film) having a thickness of 50 µm in an order of silicon oxide having a thickness of 5 nm, aluminum having a thickness of 44 nm, silicon oxide having a thickness of 67 nm, niobium oxide having a thickness of 53 nm, and silicon oxide having a thickness of 40 nm, was produced.

### [Production of Adhesive Layer]

### [Preparation of Adhesive Composition 1]

### (Preparation of Oligomer Composition 1)

60 parts by mass of dicyclopentanyl methacrylate (DCPMA) and 40 parts by mass of methyl methacrylate (MMA) as monomer components, 3.5 parts by mass of α-thioglycerol as a chain transfer agent, and 100 parts by mass of toluene as a polymerization solvent were mixed, and stirred at 70°C for 1 hour in a nitrogen atmosphere. Next, 0.2 part by mass of 2,2'-azobisisobutyronitrile (AIBN) was added to the mixture as a thermal polymerization initiator, and a reaction of the mixture was performed at 70°C for 2 hours. Then, the reaction product was heated to 80°C and a reaction of the product was performed for 2 hours. Thereafter, a reaction solution was heated to 130°C to dry and remove the toluene, the chain transfer agent, and an unreacted monomer. Accordingly, a solid acrylic oligomer (oligomer composition) was obtained. An oligomer composition 1 had a weight average molecular weight of 5,100 and a glass transition temperature (Tg) of 130°C.

### (Polymerization of Prepolymer Composition 1)

67 parts by mass of 2-ethylhexyl acrylate (2EHA), 15 parts by mass of N-vinyl-2-pyrrolidone (NVP), 3 parts by mass of hydroxyethyl acrylate (HEA), and 15 parts by mass of 4-hydroxybutyl acrylate (4-HBA) as monomer components, and 0.05 part by mass of "Irgacure 651" (trade name, manufactured by BASF) and 0.05 part by mass of "Irgacure 184" (trade name, manufactured by BASF) as photopolymerization initiators were blended. After that, this monomer mixture was partially photopolymerized by being exposed to ultraviolet rays in a nitrogen atmosphere, thereby obtaining a prepolymer composition 1 (polymerization rate of about 10%).

### (Preparation of Adhesive Composition 1)

To 100 parts by mass of the obtained prepolymer composition 1, 5 parts by mass of the oligomer composition 1, 0.3 part by mass of 1,6-hexanediol diacrylate (trade name "A-HD-N", manufactured by Shin-Nakamura Chemical Co., Ltd.), and 0.3 part by mass of a silane coupling agent (trade name "KBM-403 ", manufactured by Shin-Etsu Chemical Co., Ltd.) were added and uniformly mixed to obtain an adhesive composition 1. A gel fraction was 82%.

### [Production of Adhesive Sheet]

### (Adhesive Sheet 1)

A polyethylene terephthalate (PET) film ("DIAFOIL MRF75" manufactured by Mitsubishi Chemical Corporation) having a thickness of 75 µm and including a silicone-based release layer on a surface of the film was used as a substrate (heavy release film), and the adhesive composition 1 was applied onto the substrate so as to have a thickness of 25 µm to form a coating layer. A PET film ("DIAFOIL MRE75" manufactured by Mitsubishi Chemical Corporation) having a thickness of 75 µm and including one surface subjected to a silicone release treatment was attached as a cover sheet (light release film) onto the coating layer.

This laminate was irradiated with ultraviolet rays from a cover sheet side using a black light whose position was adjusted such that an irradiation intensity on an irradiation surface immediately below a lamp was 5 mW/cm², and photo-cured, thereby obtaining an adhesive sheet formed by an adhesive layer having a thickness of 25 µm.

### [Production of Mirror Member]

The light release film of the adhesive sheet having the thickness of 25 µm produced as described above was released, and the adhesive sheet was allowed to bond to a surface of the substrate film of the laminate 1 on which a sputtering film was not formed, so as to obtain a laminate.

The heavy release film on an adhesive layer side of the obtained laminate was released, and the laminate was allowed to bond to a polycarbonate substrate (Carboglass, black, manufactured by Asahi Glass Co., Ltd.) having a thickness of 3.0 mm as a support substrate, so as to produce a mirror member. A size of the obtained mirror member was 50 mm × 150 mm.

### [Example 2]

A film mirror laminate and a mirror member were produced in the same manner as in Example 1 except that the thickness of the second low refractive index layer was changed to 10 nm.

### [Comparative Example 1]

A film mirror laminate and a mirror member were produced in the same manner as in Example 1 except that the thickness of the second low refractive index layer was changed to 100 nm.

### [Comparative Example 2]

A film mirror laminate and a mirror member were produced in the same manner as in Example 1 except that the second low refractive index layer was not provided.

### <Curl Evaluation>

The film mirror laminate obtained in each of Examples and Comparative Examples was cut into a size of 100 mm in length × 100 mm in width, with a cutter to obtain a sample.

The obtained sample was placed on a horizontal table, heights from the table to ends of four corners of the sample were measured with a ruler, and an average for the measured four ends was defined as a curl value.

The sample was placed such that the table and the substrate film were in contact with each other, and a case where the sample curled in a surface direction in which a metallic luster layer or the like was formed was defined as + (plus). The sample was placed such that the table and the second low refractive index layer were in contact with each other, and a case where the sample curled in a direction (back surface direction) opposite to the surface direction in which the metallic luster layer or the like was formed was defined as - (minus), and results were shown in Table 1.

### <Reflectance Measurement>

With respect to the produced mirror member in each of Examples and Comparative Examples, a reflectance Y (%) was measured with respect to visible light in a wavelength range of 380 nm to 680 nm with a Hitachi spectrophotometer U-4100 measurement instrument manufactured by Hitachi High-Tech Science Corporation using D65 as a standard light source.

In the measurement, the visible light was made incident at an incident angle of 30° on a sputtered film formation surface (surface on a second low refractive index layer side) of the surface of the obtained mirror member.

A case where the reflectance was 90% or more at a wavelength of 380 nm to 680 nm was evaluated as A (good), and a case where the reflectance was less than 90% at a wavelength of 380 nm to 680 nm was evaluated as B (bad). Results are shown in Table 1.

**[Table 1]**

| | | | Comparative Example 1 | Example 1 | Example 2 | Comparative Example 2 |
|---|---|---|---|---|---|---|
| Film thickness (µm) | Second low refractive index layer | SiO2 | 100 | 40 | 10 | - |
| | High refractive index layer | Nb2O5 | 53 | 53 | 53 | 53 |
| | First low refractive index layer | SiO2 | 67 | 67 | 67 | 67 |
| | Metallic luster layer | Al | 44 | 44 | 44 | 44 |
| Curl value | | | -25.4 | -17.3 | -11.3 | -8.9 |
| Reflectance evaluation | | | A | A | A | B |

As described above, the mirror member produced by the film mirror laminate in the present examples achieves both a high reflectance and excellent curl prevention, and has an excellent reflection performance, and thus, can be applied to a mirror surface body.

Example 2 in which the thickness of the second low refractive index layer was 10 nm was more excellent in a curl prevention effect than Example 1 in which the thickness of the second low refractive index layer was 40 nm.

On the other hand, in Comparative Example 1 in which the thickness of the second low refractive index layer was 100 nm, the reflectance was as high as those of Examples 1 and 2, but a large curl occurred in the back surface direction as compared with Examples 1 and 2.

In Comparative Example 2 in which the second low refractive index layer was not provided, the occurrence of curling was prevented, but the reflectance was less than 90%, which was insufficient for application to a mirror surface body.

Using the mirror member obtained in Example 2 as a model for simulation, a reflectance at a wavelength (380 nm to 680 nm) in the case of incidence under the same conditions as the actual measurement conditions described above was calculated.

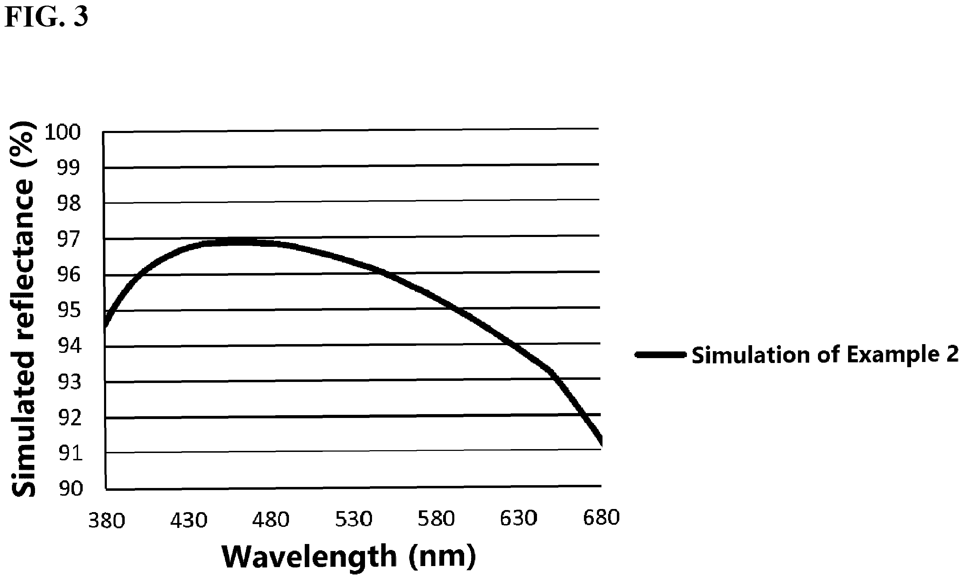

The simulation was performed using TFCalc (manufactured by Software Spectra). The result was shown in FIG. 3.

FIG. 3 is a diagram illustrating a relationship between a wavelength (380 nm to 680 nm) of incident light at 30° and a simulated value of a reflectance (%) (simulated reflectance (%)) in the mirror member in Example 2.

For the mirror member obtained in Example 2, an actual measurement value and a simulated value of a reflectance (%) at each of wavelengths shown in Table 2 were shown in Table 2.

According to Table 2, it can be seen that the actual measurement value and the simulated value of the reflectance (%) in Example 2 substantially matched each other.

**[Table 2]**

| Wavelength | Example 2 | |
|---|---|---|
| | Actual measurement value | Simulated value |
| 600 | 94.3 | 94.8 |
| 650 | 92.6 | 93.2 |
| 700 | 89.7 | 89.8 |
| 750 | 86.4 | 85.9 |
| 780 | 84.2 | 83.1 |

### [Examples 3 to 12 and Comparative Examples 3 and 4]

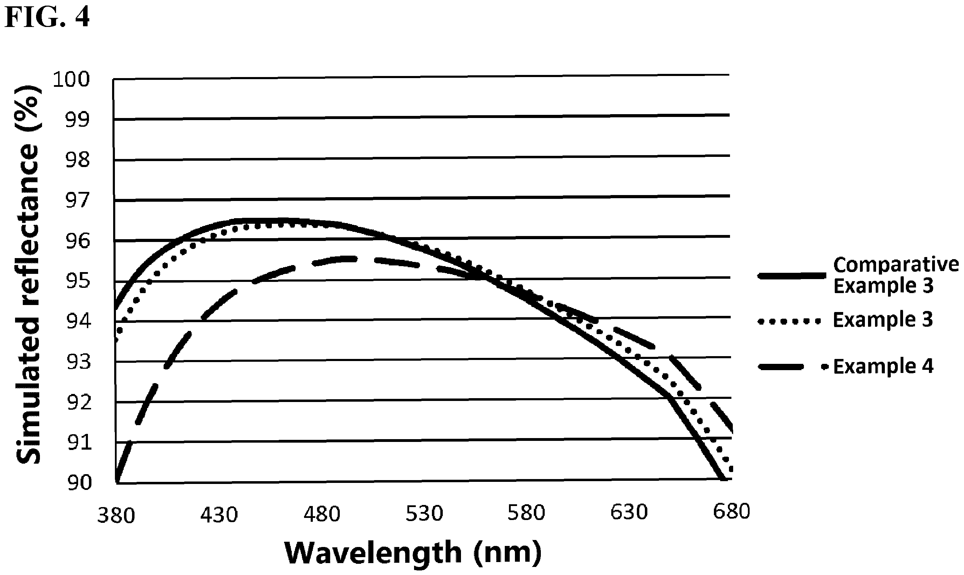

Using film mirror laminates and mirror members shown in Table 3 as models for simulation, a reflectance of each mirror member at a wavelength (380 nm to 680 nm) in the case of incidence under the same conditions as in Example 1 was simulated. A relationship between a wavelength (380 nm to 680 nm) and a simulated reflectance (%) was shown in FIGs. 4 to 7.

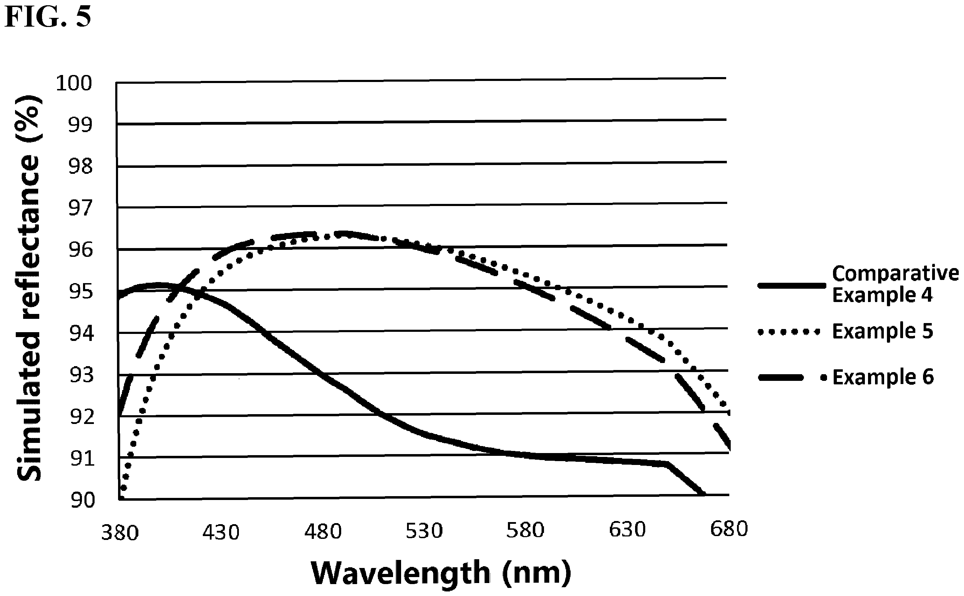

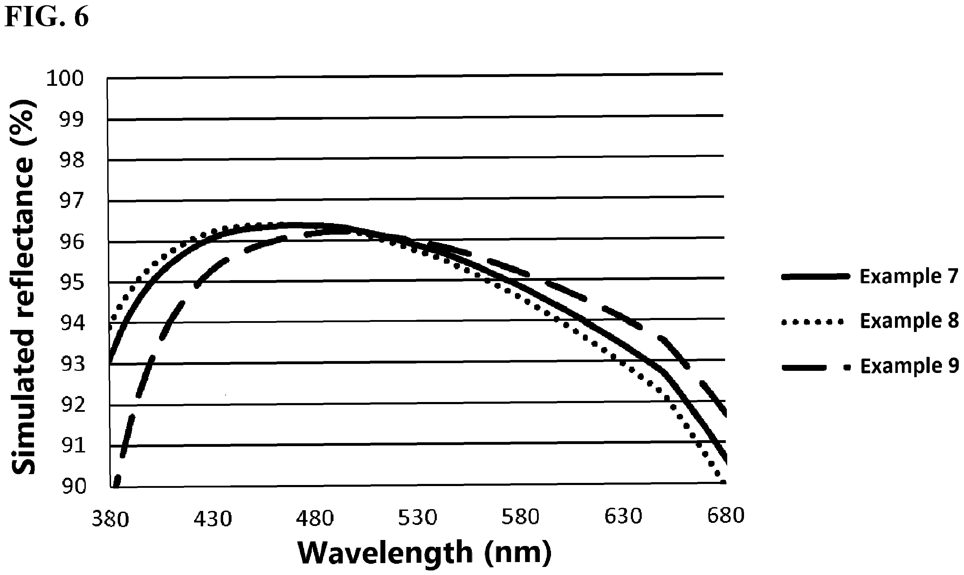

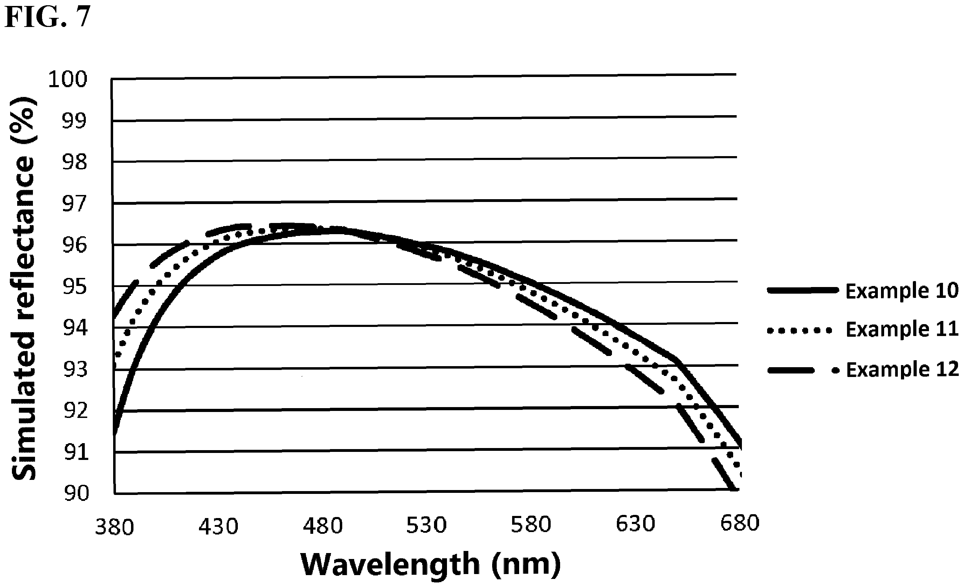

FIG. 4 is a diagram illustrating a relationship between a wavelength (380 nm to 680 nm) of incident light at 30° and a simulated reflectance (%) in each of the mirror members in Example 3, Example 4, and Comparative Example 3. FIG. 5 is a diagram illustrating a relationship between a wavelength (380 nm to 680 nm) of incident light at 30° and a simulated reflectance (%) in each of the mirror members in Example 5, Example 6, and Comparative Example 4. FIG. 6 is a diagram illustrating a relationship between a wavelength (380 nm to 680 nm) of incident light at 30° and a simulated reflectance (%) in each of the mirror members in Example 7, Example 8, and Example 9. FIG. 7 is a diagram illustrating a relationship between a wavelength (380 nm to 680 nm) of incident light at 30° and a simulated reflectance (%) in each of the mirror members in Examples 10, 11, and 12.

**[Table 3]**

| | | | Comparative Example 3 | Example 3 | Example 4 | Comparative Example 4 | Example 5 | Example 6 | Example 7 | Example 8 | Example 9 | Example 10 | Example 11 | Example 12 |
|---|---|---|---|---|---|---|---|---|---|---|---|---|---|---|
| Film thickness (nm) | Second low refractive index layer | SiC2 | 0 | 10 | 40 | 100 | 10 | 10 | 10 | 10 | 10 | 10 | 10 | 10 |
| | High refractive index layer | Nb2O5 | 53 | 53 | 53 | 53 | 53 | 53 | 53 | 53 | 60 | 57 | 54 | 51 |
| | First low refractive index layer | SiO2 | 67 | 67 | 67 | 67 | 79 | 73 | 69 | 65 | 67 | 67 | 67 | 67 |
| | Metallic luster layer | Al | 31 | 31 | 31 | 31 | 31 | 31 | 31 | 31 | 31 | 31 | 31 | 31 |

From Table 3 and FIGs. 4 to 7, it can be seen that a film mirror laminate and a mirror member achieving both a high reflectance and excellent curl prevention and having an excellent reflection performance could be produced by setting the thickness of the second low refractive index layer to 10 nm or more and 60 nm or less. In addition, it was shown that a stress due to the film thickness of each layer is relaxed, and the curling is further prevented by controlling the thickness of the first low refractive index layer to 66 nm to 78 nm, controlling the thickness of the high refractive index layer to 52 nm to 59 nm, and controlling the thickness of the second low refractive index layer to 10 nm or more and 60 nm or less.

### INDUSTRIAL APPLICABILITY

The present invention allows for providing a mirror member achieving both a high reflectance and excellent curl prevention and having an excellent reflection performance, and providing a film mirror laminate that allows the mirror member to be produced with high productivity and can be easily applied to a complicated curved surface shape or the like.

Although the present invention has been described in detail with reference to specific embodiments, it will be apparent to those skilled in the art that various changes and modifications can be made without departing from the spirit and the scope of the present invention.

The present application is based on Japanese Patent Application No. 2020-102341 filed on June 12, 2020, Japanese Patent Application No. 2020-107154 filed on June 22, 2020, Japanese Patent Application No. 2020-190351 filed on November 16, 2020, and Japanese Patent Application No. 2021-035697 filed on March 5, 2021, the contents of which are incorporated herein by reference.

### REFERENCE SIGNS LIST

- 1: film mirror laminate
- 10: adhesive layer
- 11: substrate film
- 12: metal reflective layer
- 13: reflection hue adjusting layer
- 13a: first low refractive index layer
- 13b: high refractive index layer
- 13c: second low refractive index layer
- 21: support substrate
- 100: mirror member

## Claims

1. A film mirror laminate, comprising:
a substrate film, a metal reflective layer, a first low refractive index layer, a high refractive index layer, and a second low refractive index layer in this order,
wherein a thickness of the second low refractive index layer is 10 nm or more and 60 nm or less.

2. The film mirror laminate according to claim 1,
wherein a thickness of the metal reflective layer is 100 µm or less.

3. The film mirror laminate according to claim 1 or 2,
wherein the first low refractive index layer and the second low refractive index layer contain silicon oxide.

4. The film mirror laminate according to any one of claims 1 to 3,
wherein the high refractive index layer contains niobium oxide.

5. The film mirror laminate according to any one of claims 1 to 4,
wherein the metal reflective layer contains any one of at least one metal selected from aluminum (Al), zinc (Zn), lead (Pb), copper (Cu), and silver (Ag), and an alloy containing the metal as a main component.

6. A mirror member, comprising:
the film mirror laminate according to any one of claims 1 to 5, and a support substrate,
wherein the film mirror laminate is attached to the support substrate through an adhesive layer.
